# EUROPÄISCHE PATENTANMELDUNG

(11) **EP 1 318 378 A1**
(43) Veröffentlichungstag der Anmeldung: **11.06.2003**
(21) Anmeldenummer: 02025144.3
(22) Anmeldetag: 09.11.2002
(51) Int. Cl.: G01C 9/26

(54) **Wasserwaage mit einem Hohlprofil**

(30) Priorität: 06.12.2001 AT 19092001
(71) Anmelder: Ing. Guido Scheyer SOLA-Messwerkzeuge, Gesellschaft m.b.H. & Co., A-6840 Götzis (AT)
(72) Erfinder: Hörburger, Walter, Dr., 6840 Götzis (AT)
(74) Vertreter: Hefel, Herbert, Dipl.-Ing.

(57) **Zusammenfassung**

Eine Wasserwaage umfasst ein Hohlprofil (1), das zwei Schmalseiten (2, 3), von denen zumindest eine eine Anlagefläche, zwei Breitseiten (4, 5) und zwei Stirnseiten (6, 7) aufweist, und mindestens eine Horizontallibelle (10) und eine Vertikallibelle (11) zur Durchführung einer Horizontal- und einer Vertikalmessung. Die Vertikallibelle (11) und die Horizontallibelle (10) liegen außerhalb des vom Hohlprofil (1) umgebenen Bereichs liegen und sind in an den Stirnseiten (6, 7) des Hohlprofils (1) angeordneten Seitenteilen (8, 9) vorgesehen.

## Beschreibung

Die Erfindung betrifft eine Wasserwaage mit einem Hohlprofil, das zwei Schmalseiten, von denen zumindest eine eine Anlagefläche bildet, zwei Breitseiten und zwei Stirnseiten aufweist und mit mindestens einer Horizontallibelle und einer Vertikallibelle zur Durchführung einer Horizontal- und einer Vertikalmessung.

Bei herkömmlichen derartigen Wasserwaagen sind für die Horizontal- und Vertikallibelle Ausstanzungen in dem durch das Hohlprofil gebildeten Wasserwaagenkörper vorgesehen. Eine derartige Wasserwaage ist beispielsweise in der DE 83 34 916 U1 gezeigt. Die Vertikallibelle zur Durchführung einer Vertikalmessung ist innerhalb des Hohlprofils festgelegt und durch eine Fensterausnehmung im Hohlprofil ablesbar. Die Horizontallibelle zur Durchführung einer Horizontalmessung ist ebenfalls im Inneren des Hohlprofils angeordnet und durch einen von der der Anlagefläche gegenüberliegenden Schmalseite ausgehenden Ausschnitt ablesbar. Bei der in der DE 83 34 916 U1 gezeigten Einrichtung wird die Ausrichtung der Libelle in Bezug auf das Hohlprofil durch sowohl am Libellenkörper als auch am Hohlprofil vorhandener, zusammenwirkender Führungselemente erreicht.

Bei anderen herkömmlichen Wasserwaagen ist ein Libellenträger vorgesehen, relativ zu dem der Libellenkörper bei der Montage der Wasserwaage justierbar ist, worauf eine Fixierung des Libellenkörpers gegenüber dem Libellenträger erfolgt, beispielsweise durch Klemmelemente, Ultraschallverschweißungen, Verkleben, Einschäumen des Libellenkörpers u.s.w. Ein derartiger Libellenträger, gegenüber dem der Libellenkörper justierbar ist, ist beispielsweise aus der DE 36 06 774 C2 bekannt.

Bei den in der DE 33 14 509 A1 und DE 72 34 521 U1 gezeigten Wasserwaagen sind die Horizontal- und Vertikallibelle in im Wasserwaagenkörper befindlichen Aufnahmegehäusen bzw. Libellenträgern angeordnet. Zur Ablesung der Horizontallibelle ist wie bei der oben angeführten DE 83 34 916 U1 ein von der der Anlagefläche gegenüberliegenden Schmalseite ausgehender Ausschnitt vorgesehen. Die Vertikallibelle ist hier in einem der Stirnseite des Hohlprofils benachbarten Bereich im Hohlprofil angeordnet und zur Ablesung der Vertikallibelle ist ein von der Stirnseite ausgehender Ausschnitt im Hohlprofil vorgesehen. Durch diese Anordnung der Vertikallibelle wird eine Ablesung der Vertikallibelle nicht nur von der Seite her sondern auch in axialer Richtung der Wasserwaage ermöglicht.

Bei allen diesen bekannten Wasserwaagen sind bei der Herstellung der Wasserwaage Ausschnitte im Hohlprofil vorzusehen, insbesondere mittels Ausstanzungen. Um die erforderliche Genauigkeit der Wasserwaage zu erreichen, bestehen die Hohlprofile, besonders bei längeren Wasserwaagen, meist aus Metall, speziell aus Aluminium. Die Durchführung von Ausstanzungen bei der Herstellung solcher den Wasserwaagenkörper bildender Hohlprofile ist mit einem zusätzlichen Arbeitsaufwand verbunden.

Aufgabe der Erfindung ist es eine einfacher bzw. kostengünstiger herstellbare Wasserwaage bereitzustellen. Erfindungsgemäß gelingt dies durch eine Wasserwaage mit den Merkmalen des Anspruchs 1.

Bei einer erfindungsgemäßen Wasserwaage sind im Hohlprofil keine Aussparungen für die Libellen erforderlich. Das Hohlprofil kann hier günstigerweise völlig ohne Aussparungen ausgebildet werden.

Bei einer erfindungsgemäßen Wasserwaage wird die Herstellung der gesamten Wasserwaage vereinfacht. Auch kann an der Breitseite des Hohlprofils aufgrund der fehlenden Aussparungen eine durchgehende Fläche für Aufdrucke, beispielsweise als Werbefläche, bereitgestellt werden.

Weitere Vorteile und Einzelheiten der Erfindung werden im folgenden Anhand der beiliegenden Zeichnung erläutert. In dieser zeigen:
- Fig. 1: eine perspektivische Darstellung eines ersten Ausführungsbeispiels einer erfindungsgemäßen Wasserwaage;
- die Fig. 2 und 3: Seitenansichten von geringfügig modifizierten Ausführungsfor- men (wobei die Länge des Hohlprofils zur Platzersparnis der Darstellung verkürzt dargestellt ist);
- die Fig. 4 bis 6: schematisierte perspektivische Darstellungen nach Art von Explo- sionsdarstellungen verschiedener Ausführungsbeispiele der Erfindung (wobei die Länge des Hohlprofils wiederum verkürzt dargestellt ist) und
- Fig.7: einen schematischen Schnitt entlang der Linie AA von Figur 3.

Analoge Teile sind in den einzelnen Figuren mit den gleichen Bezugszeichen versehen.

Die in Figuren dargestellten Wasserwaagen weisen jeweils ein Hohlprofil 1 in Form eines Rechteckprofils auf, das zwei Schmalseiten 2, 3, von denen die untere Schmalseite 3 eine Anlagefläche bildet, zwei Breitseiten 4, 5 und zwei Stirnseiten 6, 7 besitzt. Die Schmalseiten 2, 3 und die Breitseiten 4, 5 sind bei den gezeigten Ausführungsformen als ebene Flächen ausgebildet. Grundsätzlich könnten die Seiten der Wasserwaage auch profiliert sein. Beispielsweise könnten die Breitseiten 4, 5 von zwei in der Höhe aneinander anschließenden, winklig zueinander stehenden Abschnitten gebildet werden, so daß im Querschnitt ein beidseitig zum Beispiel nach innen gerichtet V-förmiges Profil gebildet wird.

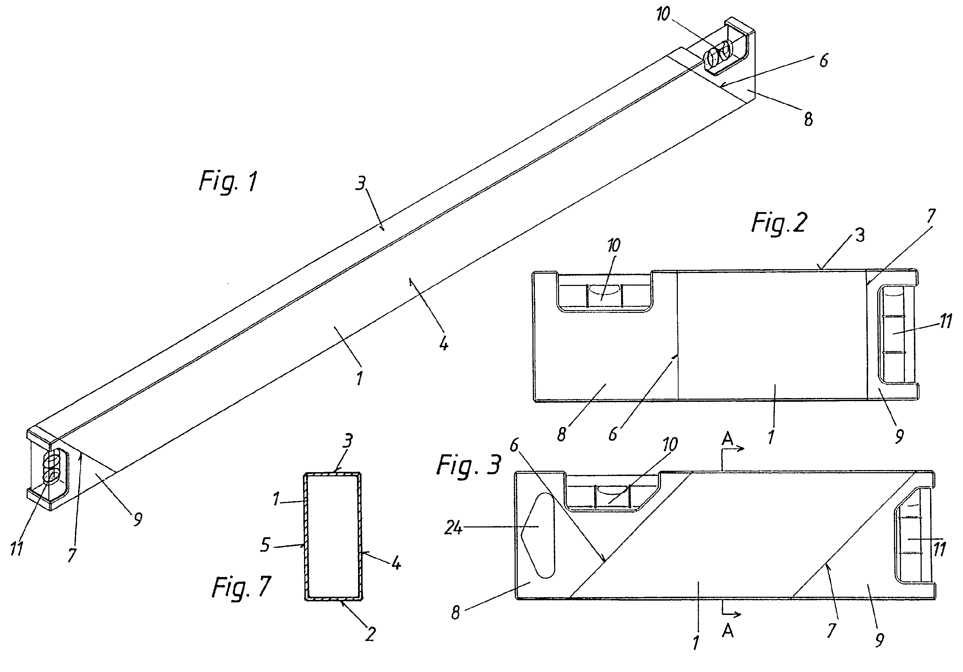

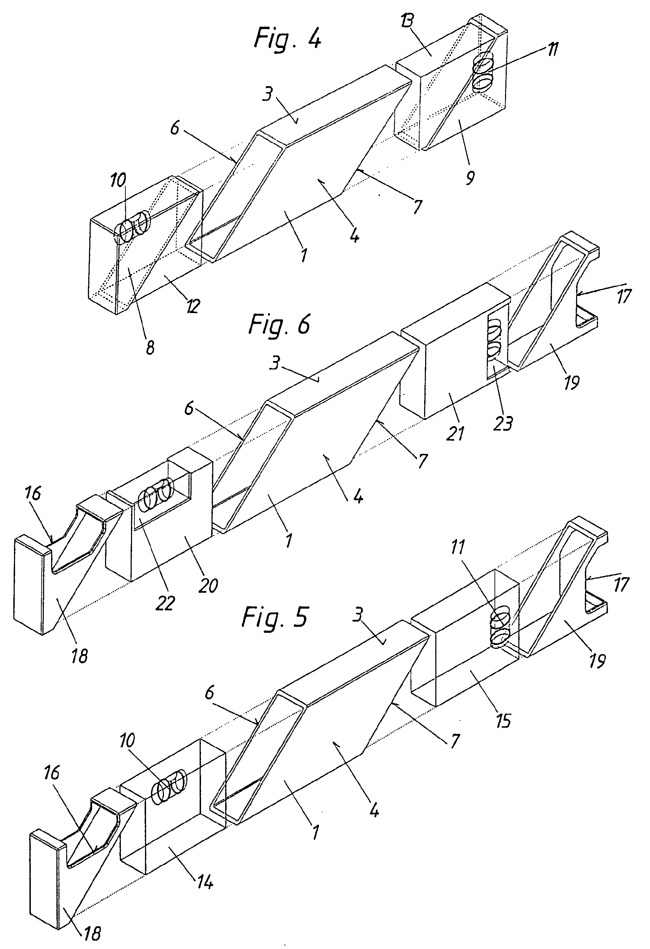

Die Stirnseiten 6, 7 sind beim Ausführungsbeispiel gemäß Fig. 2 in Seitenansicht gesehen senkrecht zur Längserstreckung des Hohlprofils 1 ausgerichtet, bei den übrigen Ausführungsbeispielen sind die Stirnseiten 6, 7 abgeschrägt, das heißt sie weisen einen Winkel ungleich 90° zur Längsachse des Hohlprofils 1 auf. An den Stirnseiten 6, 7 ist jeweils ein Seitenteil 8, 9 angeordnet, das im fertig montierten Zustand der Wasserwaage (Fig. 1 - 3) unmittelbar an die entsprechende Stirnseite 6, 7 anschließt und das Hohlprofil 1 fortsetzt. Der Wasserwaagenkörper wird somit durch das Hohlprofil 1 zusammen mit den an den Stirnflächen festgelegten Seitenteilen 8, 9 gebildet. In den schematischen Explosionsdarstellungen gemäß Fig. 4 - 6 sind diese Teile im auseinander gezogenen Zustand dargestellt.

Die Wasserwaage weist eine Horizontallibelle 10 zur Durchführung einer Horizontalmessung und eine Vertikallibelle 11 zur Durchführung einer Vertikalmessung auf. Diese Libellen 10, 11 sind in den Seitenteilen 8, 9 angeordnet und liegen außerhalb des vom Hohlprofil 1 umgebenen Bereichs. In einem der Seitenteile 8 ist die Horizontallibelle 10 und im anderen Seitenteil 9 ist die Vertikallibelle 11 vorgesehen.

Das Hohlprofil 1 besteht bevorzugterweise aus Aluminium und die Seitenteile 8, 9 bestehen bevorzugterweise zumindest im wesentlichen aus Kunststoff. Aufgrund der Anordnung der Libellen 10, 11 außerhalb des vom Hohlprofil 1 umgebenen Bereichs in den Seitenteilen 8, 9 können die Schmalseiten 2, 3 und die Breitseiten 4, 5 des Hohlprofils 1 als geschlossene, ausstanzungsfreie Flächen ausgebildet sein.

Zur Befestigung der Seitenteile 8, 9 am Hohlprofil 1 können die Seitenteile 8, 9 in den Innenraum des Hohlprofils 1 ragende Abschnitte aufweisen, die im Hohlprofil 1 festgelegt sind, beispielsweise angeklebt, geklemmt oder verschweißt sind. Bei den in den Figuren dargestellten Ausführungsbeispielen schließen die Seitenteile 8, 9 bündig an das Hohlprofil 1 an und die Schmalseiten 2, 3 und Breitseiten 4, 5 des Hohlprofils werden in einer Ebene durch die Seitenteile 8, 9 fortgesetzt.

Bei dem in Fig. 4 schematisch dargestellten Ausführungsbeispiel werden die Seitenteile 8, 9 vom entsprechend geformten Libellenkörper der Horizontal- bzw. Vertikallibelle selbst gebildet. Ein jeweiliger Libellenkörper weist einen Abschnitt 12, 13 mit einem gegenüber dem übrigen Teil des Libellenkörpers, in dem die Libelle 10, 11 angeordnet ist, verringerten Querschnittsabmessungen auf. Dieser Abschnitt 12, 13 ist mit geringem Spiel in den Innenraum des Hohlprofiles 1 einschiebbar. Das Spiel zwischen Libellenkörper und Hohlprofil 1 könnte hierbei zur Justierung der Libelle verwendet werden. Beispielsweise kann der Abschnitt 12, 13 mit einem Klebstoff versehen werden und nach dem Einschieben in das Hohlprofil 1 und der Justierung des Seitenteils 8, 9 wird der Klebstoff aushärten gelassen.

Bei dem in Fig. 5 dargestellten Ausführungsbeispiel sind die Seitenteile 8, 9 mehrteilig ausgebildet und umfassen einen Libellenkörper 14, 15 und eine ein Sichtfenster 16 für die Libelle 10, 11 aufweisende Abdeckung 18, 19, die vorzugsweise als gespritztes Kunststoffteil ausgebildet ist. Der Libellenkörper 14, 15 ist mit geringem Spiel in den Innenraum des Hohlprofils einschiebbar und im Hohlprofil - eventuell nach einer vorausgehenden Justierung des Libellenkörpers - festlegbar. Die Abdeckung 18, 19 ist auf den Libellenkörper 14, 15 aufschiebbar, bis sie bündig am Hohlprofil 1 anliegt und ist in dieser Position am Libellenkörper 14, 15 befestigbar, beispielsweise durch Verkleben.

Bei dem in Fig. 6 schematisch dargestellten Ausführungsbeispiel ist der Libellenkörper 22, 23 in einem jeweiligen Libellenträger 20, 21 festgelegt. Der Libellenträger 20, 21 ist mit geringem Spiel in den Innenraum des Hohlprofils 1 einschiebbar und in diesem befestigbar. Der Libellenkörper 22, 23 kann gegenüber dem Libellenträger 20, 21 auf unterschiedliche Weise justierbar sein, wie dies von herkömmlichen Wasserwaagen her bekannt ist. In der justierten Lage erfolgt die Festlegung des Libellenkörpers 22, 23 gegenüber dem Libellenträger 20, 21, vorzugsweise nach dem bereits erfolgten Einbau des Libellenträgers 20, 21 in das Hohlprofil 1. Kappenförmige Abdeckungen 18, 19, die über den Libellenträger 20, 21 aufgeschoben werden, bis sie bündig am Hohlprofil 1 anliegen, und in dieser Position festgelegt werden, können vorgesehen sein. Diese Abdeckungen 18, 19 weisen jeweils Sichtfenster 16, 17 für die Libellen auf.

Bei dem in Fig. 3 dargestellten Ausführungsbeispiel ist weiters im Seitenteil 8 ein Aufhängeloch 24 für die Wasserwaage vorgesehen. Auch für dieses Aufhängeloch 24 ist somit keine Ausstanzung im Hohlprofil 1 selbst erforderlich.

Prinzipiell wäre es denkbar und möglich, im Inneren des Hohlprofils 1 Versteifungsrippen, Trennwände oder dergleichen vorzusehen. Versteifungsrippen könnten auch an der Außenseite des Hohlprofils 1 angeordnet sein, beispielsweise in Form von in Längsrichtung des Hohlprofils 1 an dessen Breitseiten 4 verlaufenden Rippen. Grundsätzlich denkbar und möglich wäre es auch, beide Schmalseiten 2, 3 als Anlageflächen vorzusehen.

### Legende zu den Hinweisziffern:

- 1: Hohlprofil
- 2: Schmalseite
- 3: Schmalseite
- 4: Breitseite
- 5: Breitseite
- 6: Stirnseite
- 7: Stirnseite
- 8: Seitenteil
- 9: Seitenteil
- 10: Horizontallibelle
- 11: Vertikallibelle
- 12: Abschnitt
- 13: Abschnitt
- 14: Libellenkörper
- 15: Libellenkörper
- 16: Sichtfenster
- 17: Sichtfenster
- 18: Abdeckung
- 19: Abdeckung
- 20: Libellenträger
- 21: Libellenträger
- 22: Libellenkörper
- 23: Libellenkörper
- 24: Aufhängeloch

## Patentansprüche

1. Wasserwaage mit einem Hohlprofil (1), das zwei Schmalseiten (2, 3), von denen zumindest eine eine Anlagefläche bildet, zwei Breitseiten (4, 5) und zwei Stirnseiten (6, 7) aufweist, und mit mindestens einer Horizontallibelle (10) und einer Vertikallibelle (11) zur Durchführung einer Horizontal- und einer Vertikalmessung, **dadurch gekennzeichnet, daß** die Vertikallibelle (11) und die Horizontallibelle (10) außerhalb des vom Hohlprofil (1) umgebenen Bereichs liegen und in an den Stirnseiten (6, 7) des Hohlprofils (1) angeordneten Seitenteilen (8, 9) vorgesehen sind.

2. Wasserwaage nach Anspruch 1 **dadurch gekennzeichnet, daß** im einen der Seitenteile (8) die Horizontallibelle (10) und im anderen der Seitenteile (9) die Vertikallibelle (11) angeordnet ist.

3. Wasserwaage nach Anspruch 1 oder Anspruch 2 **dadurch gekennzeichnet, daß** zur Befestigung der Seitenteile (8, 9) am Hohlprofil (1) die Seitenteile (8, 9) in den Innenraum des Hohlprofils (1) ragende Abschnitte (12, 13) aufweisen, die im Hohlprofil (1) festgelegt sind.

4. Wasserwaage nach einem der Ansprüche 1 bis 3 **dadurch gekennzeichnet, daß** die Seitenteile (8, 9) die Schmalseiten (2, 3) und die Breitseiten (4, 5) des Hohlprofils (1) in der gleichen Ebene fortsetzen.

5. Wasserwaage nach einem der Ansprüche 1 bis 4 **dadurch gekennzeichnet, daß** die Seitenteile (8, 9) jeweils von einem Libellenkörper gebildet werden.

6. Wasserwaage nach Anspruch 5 **dadurch gekennzeichnet, daß** ein jeweiliger Libellenkörper einen Abschnitt (12, 13) mit gegenüber dem übrigen Teil des Libellenkörpers, in dem die Libelle (10, 11) angeordnet ist, verringerten Querschnittsabmessungen aufweist, wobei dieser Abschnitt (12, 13) mit geringem Spiel in den Innenraum des Hohlprofils (1) einschiebbar ist.

7. Wasserwaage nach einem der Ansprüche 1 bis 4 **dadurch gekennzeichnet, daß** die Seitenteile (8, 9) jeweils mehrteilig ausgebildet sind und einen Libellenkörper (14, 15), der zumindest zu einem Teil mit geringem Spiel in den Innenraum des Hohlprofils (1) einschiebbar ist und eine ein Sichtfenster (16, 17) für die Libelle (10, 11) aufweisende Abdeckung (18, 19), die vorzugsweise aus Kunststoff besteht, umfassen.

8. Wasserwaage nach einem der Ansprüche 1 bis 4 **dadurch gekennzeichnet, daß** die Seitenteile (8, 9) jeweils mehrteilig ausgebildet sind und einen den Libellenkörper (22, 23) tragenden Libellenträger (20, 21) umfassen, der am Hohlprofil (1) befestigt ist.

9. Wasserwaage nach Anspruch 8 **dadurch gekennzeichnet, daß** der Libellenträger (20, 21) zumindest zu einem Teil mit geringem Spiel in den Innenraum des Hohlprofils (1) einschiebbar ist.

10. Wasserwaage nach Anspruch 8 oder Anspruch 9 **dadurch gekennzeichnet, daß** weiters eine ein Sichtfenster (16, 17) für die Libelle (10, 11) aufweisende Abdeckung (18, 19) vorgesehen ist, die den Libellenträger umgibt und bündig an das Hohlprofil (1) anschließt.

11. Wasserwaage nach einem der Ansprüche 1 bis 10 **dadurch gekennzeichnet, daß** die Schmalseiten (2, 3) und die Breitseiten (4, 5) des Hohlprofils (1) geschlossene, ausstanzungsfreie Flächen sind.

12. Wasserwaage nach einem der Ansprüche 1 bis 11 **dadurch gekennzeichnet, daß** die Seitenteile (8, 9) zumindest im wesentlichen aus Kunststoff bestehen.

13. Wasserwaage nach einem der Ansprüche 1 bis 12 **dadurch gekennzeichnet, daß** das Hohlprofil (1) aus Aluminium besteht.
